# FASCICULE DE BREVET EUROPEEN

(11) **EP 1 132 667 B1**
(45) Date de publication et mention de la délivrance du brevet: **27.07.2005**
(21) Numéro de dépôt: 01400328.9
(22) Date de dépôt: 09.02.2001
(51) Int. Cl.: F16K 1/20

(54) **Système de réduction de section d'écoulement pour canalisation de fluide**
System zur Reduziering des Querschnitts in einem Durchflusskanal
System to reduce the passage in a flow channel

(30) Priorité: 09.02.2000 FR 0002065
(43) Date de publication de la demande: 12.09.2001
(73) Titulaire: MECAPLAST SAM, MC-98000 Monaco (MC)
(72) Inventeur: Bigot, Sylvain, Winter Palace, 06500 Menton (FR)
(74) Mandataire: Debay, Yves

(56) Documents cités:
- EP-A- 0 312 810
- EP-A- 0 480 393
- EP-A- 0 701 057
- EP-A- 0 747 587
- DE-A- 2 733 991
- NL-A- 7 215 373

## Description

La présente invention concerne un système de réduction de section d'écoulement pour canalisation de fluide.

Un inconvénient majeur des systèmes actuels de réglage du débit de fluide dans une canalisation réside dans le fait que tout ou partie du mécanisme servant à régler la progressivité ou l'ouverture respectivement fermeture de la canalisation, se trouve dans le tube lui-même, ce qui crée des perturbations du flux.

Ce système de réduction de section d'écoulement peut être utilisé, par exemple, pour réaliser l'obturation partielle de chaque conduit de culasse conduisant vers un cylindre d'un moteur. Un tel système peut être intégré ou non à un répartiteur d'admission d'air pour un moteur à combustion interne. Un tel dispositif est particulièrement utile dans le moteur dont le conduit de culasse est constitué d'un conduit inférieur et d'un conduit supérieur et dont on cherche à obturer partiellement le conduit d'air pour régénérer une turbulence dite "tumble". Les moteurs nécessitant ce type de turbulences possèdent un conduit d'admission par cylindres pouvant se séparer dans la culasse dans le cas d'un moteur multisoupape. Les dispositifs connus de l'art antérieur ont l'inconvénient de générer une perte de charge par la présence de l'axe d'articulation des volets d'obturation dans le conduit d'admission. Cet inconvénient est corrigé par le système proposé dans le brevet EP0701057 qui enseigne un axe de commande des obturateurs disposé à l'extérieur du conduits. Le volet d'obturation ainsi divulgué est en forme de godet creux et comprend deux parois, une paroi d'obturation fixée à l'axe de commande qui ferme l'amont du conduit, un voile de fond fermant l'aval du conduit et des jambes latérales raccordant la paroi d'obturation et le voile de fond pour rigidifier le godet. La forme en godet du volet obturateur est un inconvénient de cet art antérieur. De cette forme résulte un couple de torsion important sur l'axe, lorsque l'obturateur est en position saillante dans le conduit, c'est à dire lorsque le conduit est fermé. De plus en position d'ouverture du conduit, le godet est escamoté dans un logement latéral dans la paroi du conduit, ce qui induit un évasement important du logement du à la forme de l'obturateur.

Le but de l'invention est de pallier les inconvénients de l'art antérieur. Ce but est atteint par le système d'obturation selon la revendication 1.

D'autres particularités du système d'obturation, selon l'invention, sont définies conformément aux sous-revendications 2 à 17. Ainsi d'autres particularités et avantages de la présente invention apparaîtront plus clairement à la lecture de la description ci-après faite en référence aux dessins annexés dans lesquels :
- la figure 1A représente une vue en perspective éclatée du système d'obturation selon l'invention;
- la figure 1B représente une vue en perspective du système selon l'invention;
- la figure 1C représente une vue de côté du système selon l'invention;
- la figure 1D représente une vue en coupe longitudinale du système selon l'invention;
- la figure 1 E représente une vue en coupe transversale selon A/A;
- la figure 1 F représente une vue en coupe selon l'axe E/E;
- la figure 1G représente une vue en coupe selon l'axe C/C,
- la figure 2A représente une vue en perspective du système selon l'invention monté sur le répartiteur d'air,
- les figures 2B et 2C représente une vue en coupe transversale du système accolé directement à la culasse, l'obturateur étant en position ouverte et respectivement en position fermée,
- la figure 2D représente une vue en perspective éclatée du système d'obturation selon l'invention sans le couvercle, le système étant monté sur le répartiteur d'air.

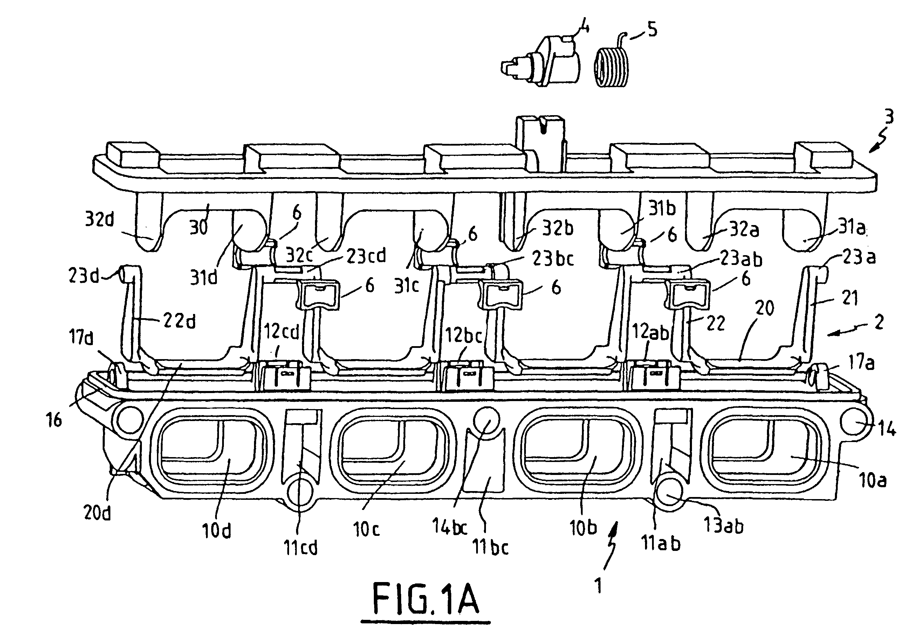

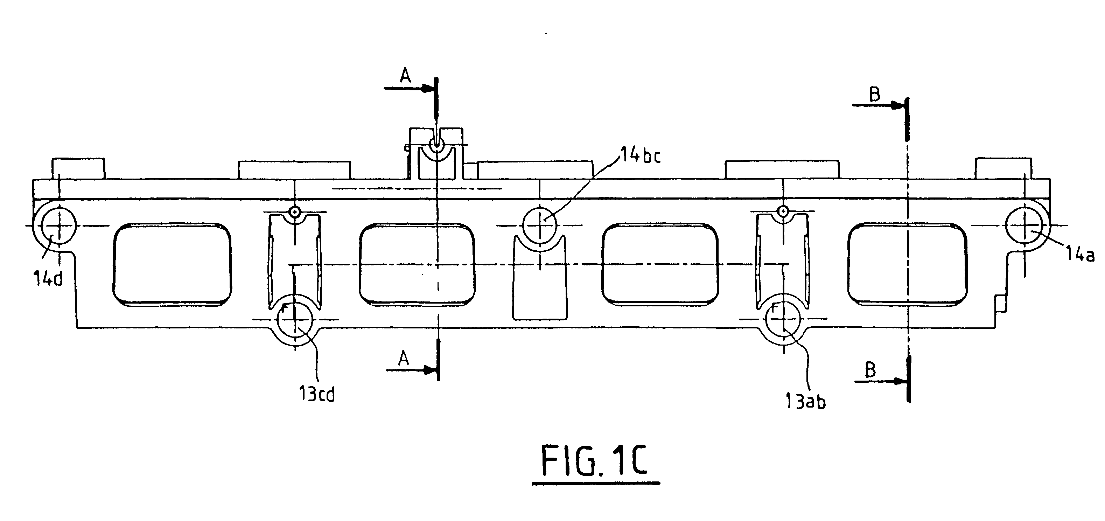

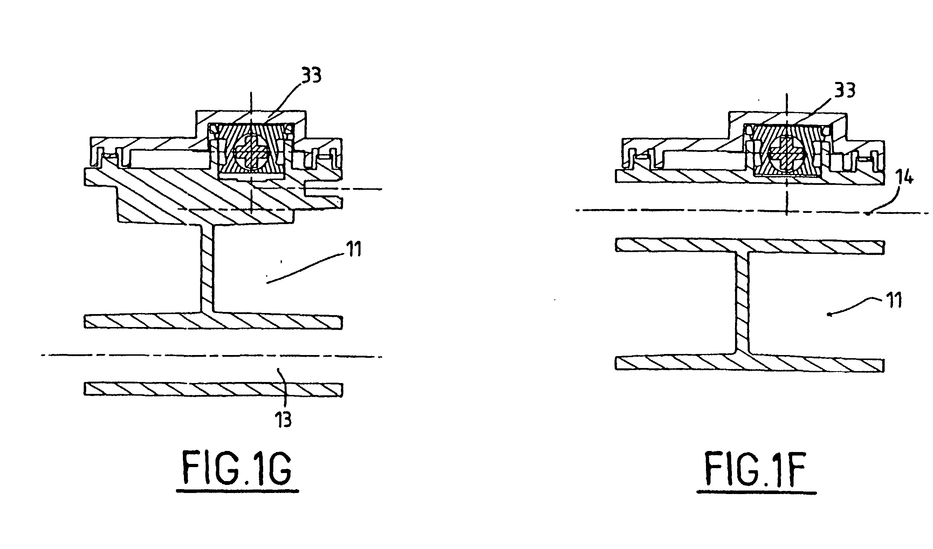

L'invention va maintenant être décrite en liaison avec les figures 1A à 2D.

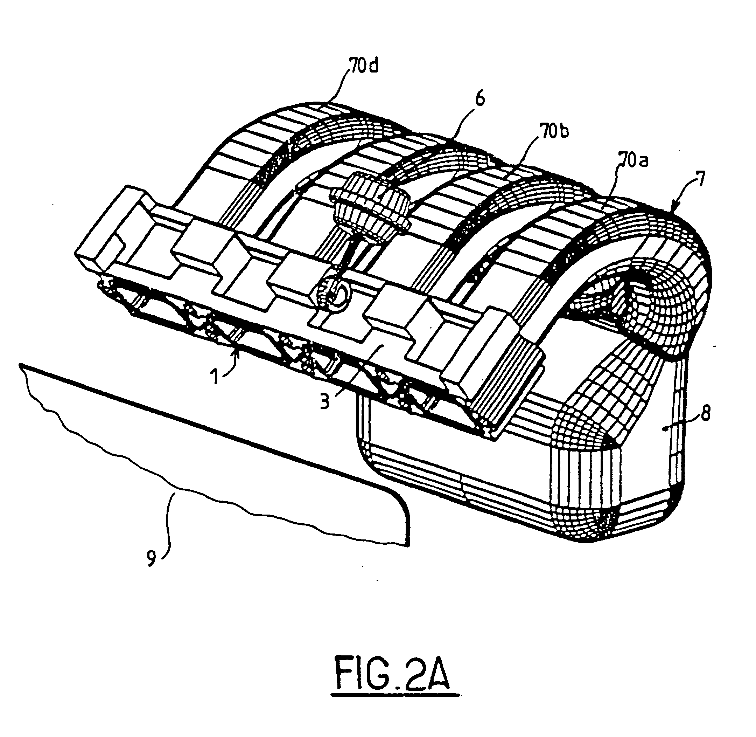

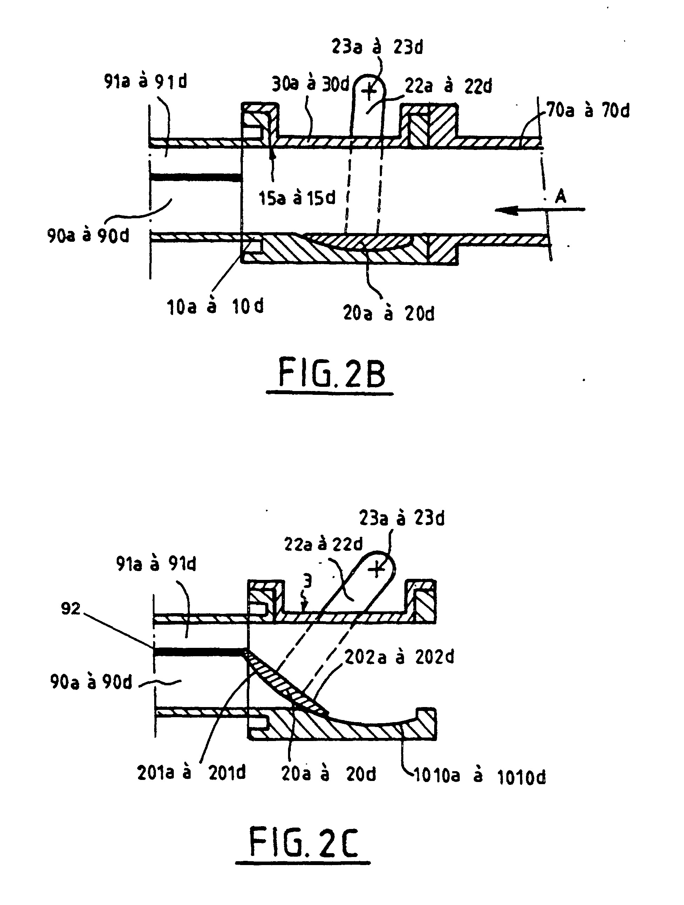

Le boîtier (1) est constitué d'une pluralité de passages (10a, 10b, 10c et 10d) qui sont en nombre égal au nombre de conduits de la culasse (9 figure 2A) et au nombre de conduits (70a à 70d) provenant du répartiteur d'admission d'air. Ce répartiteur (7) comporte à son autre extrémité une cartouche (8) de filtre à air et les canalisations (70a à 70d) débouchent dans un côté du passage (10a à 10d) du boîtier tandis que l'autre face ouverte du passage débouche dans les conduits aménagés dans la culasse du moteur. Ces conduits d'admission par cylindre peuvent se séparer dans la culasse dans le cas d'un moteur multisoupape. En tout état de cause, les conduits (9a à 9d), comme représenté sur la figure 2B, sont cloisonnés par une paroi disposée dans la culasse de manière à déterminer un conduit inférieur (90a à 90d) et un conduit supérieur (91a à 91d). Dans chaque passage (10a à 10d) est aménagé un évidement (1010a à 1010d) dans lequel est placé un volet (20a à 20d) en position ouverte, ce volet (20a à 20d) venant obturer le conduit inférieur (90a à 90d) lorsque l'axe de rotation des volets est actionné par un mécanisme. Cette obturation permet de générer une turbulence dite "tumble" par obturation partielle du conduit d'air. Chaque volet comporte, orienté vers l'intérieur du passage (10a à 10d) respectif une surface plane ou correspondant à la forme du conduit (202a à 202d, figure 2C) située dans le prolongement des surfaces (100, 101) délimitant le logement et le conduit tandis que la surface extérieure du volet orienté vers l'évidement (1010a à 1010d) est constituée d'une portion de cylindre (201a à 201d) d'axe confondu avec l'axe de rotation (23a à 23d) respectif de chaque volet.

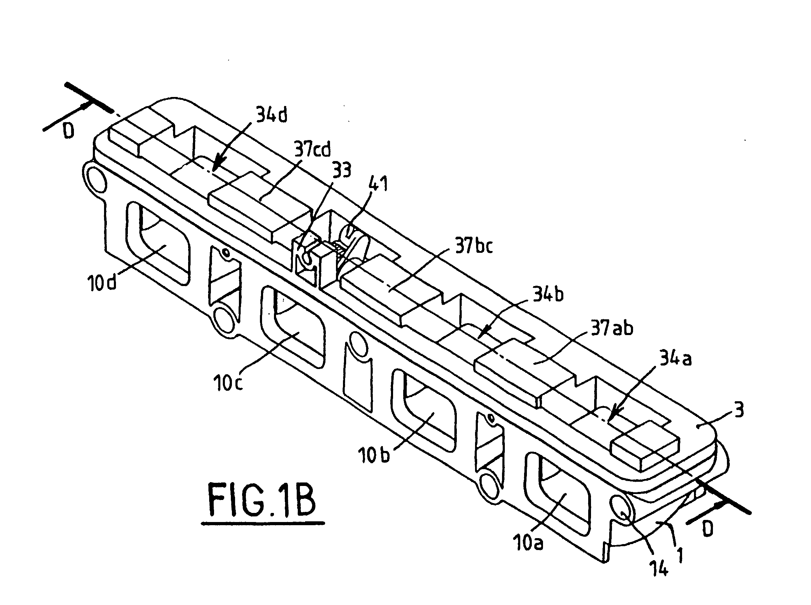

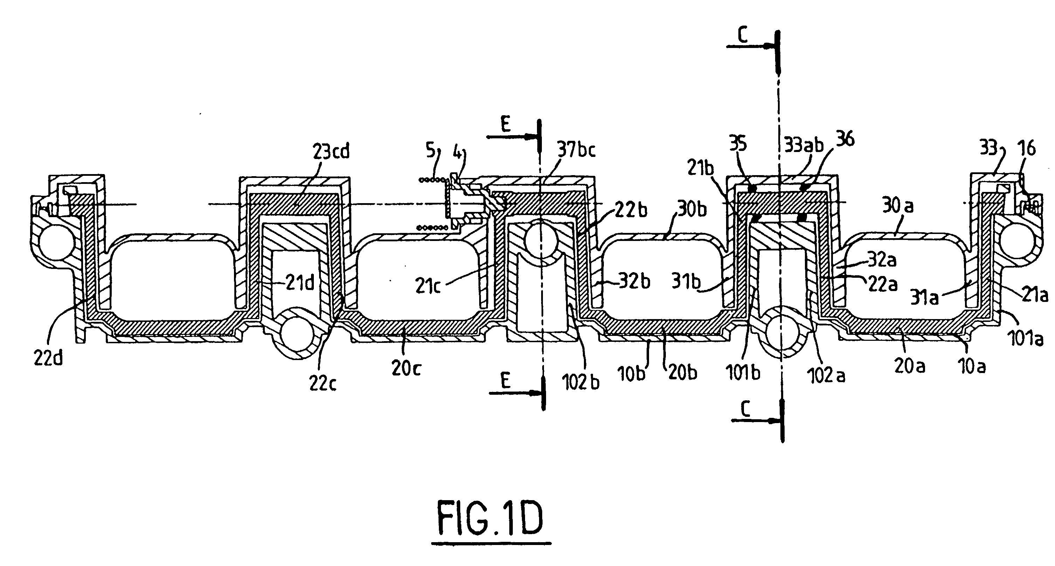

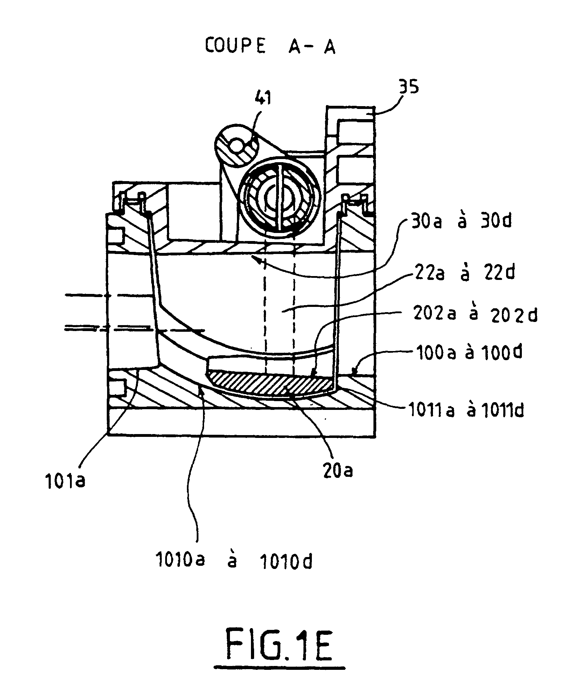

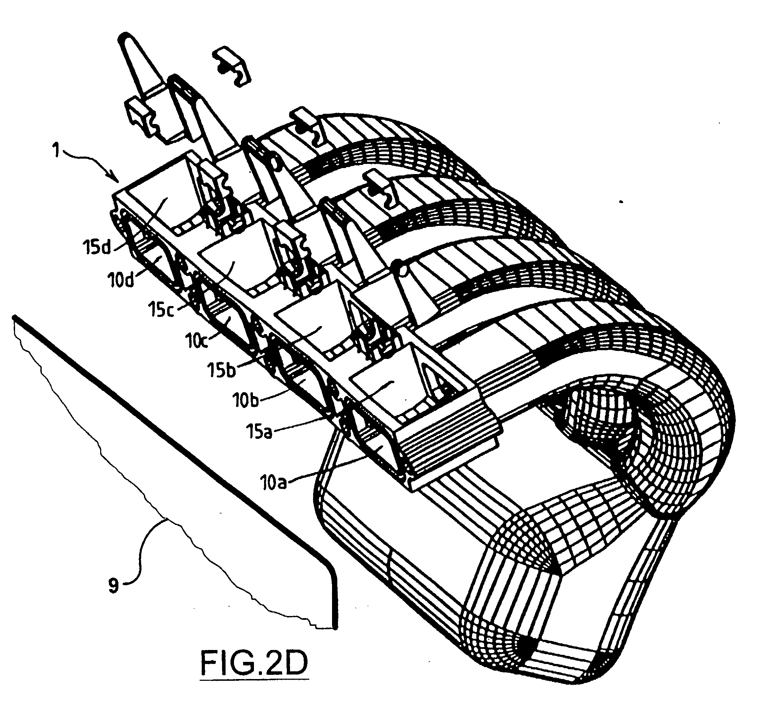

Chaque passage (10a à 10d) du boîtier (1) débouche, sur sa partie supérieure, sur une ouverture (15a à 15d, figure 2D) et chacune de ces ouvertures (15a à 15d) est obturée par une surface respective (30a à 30d) d'un couvercle (3). Chacun des passages est formé dans une pièce monobloc, par exemple en matière plastique moulée et, dans l'intervalle, entre deux passages (10a à 10b) est formé un évidement (11ab, respectivement 11bc, 11cd figure 1A), cet évidement se terminant à sa partie inférieure par un canal (13ab, figure 1A) pour le passage de la partie située entre les passages (10a et 10b) et à la partie supérieure par un canal (14bc, figure 1A) pour la partie située entre les passages (10b et 10c) et ceci alternativement, de façon à constituer des canaux disposés en quinconce, ces canaux étant destinés à recevoir des vis de fixation sur la culasse du moteur. Le boîtier comporte dans sa partie supérieure où sont formées les ouvertures (15a à 15d), une lèvre périphérique (16) destinée à réaliser l'étanchéité avec la forme complémentaire prévue sur le couvercle (3, figures 1A et 1D), et entre les ouvertures (15a à 15d), des logements (12ab, 12bc, 12cd) destinés à recevoir des pièces (6) constituant les paliers de rotation des axes (23ab, 23bc, 23cd) d'entraînement des volets (20a, 20b, 20c, 20d). Comme représenté à la figure 1D, chaque volet a substantiellement une section en forme de U dans laquelle la partie centrale (20a) a une dimension prévue pour venir se placer dans l'évidement correspondant (1010a), respectivement (1010b, 1010c, 1010d), pour les volets (20b, 20c, 20d) du boîtier (1). Cette partie centrale se prolonge par deux jambes (21a respectivement 21b, 21c, 21d) et de l'autre côté (22a respectivement 22b, 22c, 22d). La jambe la plus externe comporte à son extrémité un palier (23a) venant se loger dans une saillie (17a) pourvue d'un perçage destiné à recevoir le palier (23a) et à l'autre extrémité du boîtier dans une autre saillie (17d) destinée à recevoir le palier (23d) de la dernière jambe (22d) du volet (20d, figure 1A). La deuxième jambe (22a) du premier volet (20a) est reliée par un axe (23ab) à la première jambe (21 b) du deuxième volet (20b) et ainsi de suite, la deuxième jambe (22d) du deuxième volet est reliée par un axe (23bc) à la première jambe (21c) du troisième volet (20c). Enfin, la deuxième jambe du troisième volet (20c) est reliée par un axe (23cd) à la première jambe (21d) du dernier volet (20d) comme on peut le voir sur les figures 1E, 2B et 2C. Ceci permet de constituer un ensemble volet-axe monobloc dont les axes sont décalés pour s'intercaler chacun entre deux volets adjacents. Les jambes (21a à 21d) et (22a à 22d) supportant chaque élément obturateur sont raccordées de façon à ce que leur axe de symétrie soit confondu avec la bissectrice de l'angle ayant pour sommet le centre de rotation et pour côté les droites passant par les extrémités de l'élément obturateur par rapport au sens d 'écoulement du fluide. Cette symétrisation du montage des jambes par rapport à l'axe de symétrie de la géométrie de l'ensemble volet-axe d'articulation permet d'assurer la stabilité des volets (20a à 20d) lorsque ceux-ci sont en position saillante dans le conduit. Il est bien évident que le système de réduction de section d'écoulement est représenté avec quatre volets pour un moteur à quatre conduits d'admission mais dans le cas où le moteur comporte plus ou moins de quatre cylindres, l'adaptation de l'invention ne fait aucune difficulté pour l'homme de métier et l'invention n'est nullement limitée à son application à un moteur à quatre cylindres. On peut tout aussi bien l'adapter sur un moteur comportant un nombre quelconque de cylindres, par exemple trois cylindres, cinq cylindres ou six cylindres voire V8 ou V12. La pièce (2) monobloc constituant l'ensemble volet-axe forme ainsi, en vue de devant ou en coupe, une succession de créneaux dont la partie basse constitue les volets (20a à 20d) et les parties hautes les axes de rotation de ces volets. Une fois l'ensemble volet introduit dans les passages pour venir se positionner dans les évidements (1010a à 1010d), le système d'obturation est fermé par un couvercle (3) qui comporte pour chaque passage une surface (30a à 30d) parallèle à la surface (202a à 202d, figures 1E et 1D) fermée pour le conduit. Cette surface (30a à 30d) se prolonge vers le bas par des jambes (31a, 32a respectivement 31b, 32b; 31c, 32c; 31d; 32d, figure 1A) pour venir s'arrêter à proximité de la surface plane formant le volet, ces surfaces latérales étant conformées en arrondi pour permettre le déplacement du volet, tout en assurant une étanchéité relative d'un passage à l'autre et pour avoir une section d'écoulement identique au conduit. Dans le cas où une étanchéité absolue est nécessaire, il est prévu de disposer des joints d'étanchéité (35, 36) dans les demi paliers (6) destinés à supporter les axes intercalaires entre chaque volet, comme représenté sur la figure 1D. Il est bien évident qu'en plus de chaque intervalle entre chaque volet les axes d'extrémité (23a, 23d) sont pourvus de joints d'étanchéité. Le couvercle comporte également des capots (37cd, 37bc, 37ab, figure 1B) solidaires des cloisons verticales (31b, 32a respectivement 32b, 31c respectivement 31c, 32d) qui se prolongent vers le haut de façon à former des puits (34a à 34d) obturés par la surface centrale (30a à 30d). Un de ces capots (37bc par exemple) est pourvu d'un perçage dans lequel, comme représenté à la figure 1 D, vient se monter en rotation une pièce (4) d'entraînement de l'axe central (23bc) de commande des volets, l'extrémité (4) de cette pièce comportant un doigt (41) actionnable par un actionneur électrique ou pneumatique (6), comme représenté à la figure 2A. Un ressort de rappel (5) ramène les volets en position repos, c'est à dire dans une position où le volet (20a) vient en butée contre l'épaulement (1011a à 1011d) qui termine l'évidement (1010a à 1010d) en direction du répartiteur d'air (7). L'actionneur électrique ou pneumatique vient se fixer sur une excroissance (35) prévue sur le couvercle (3).

Comme on peut le voir figures 2B et 2C, le système est accolé directement à la culasse (9) en venant réduire la section d'écoulement par appui de chaque volet sur la cloison (92) de chacun des conduits (90a à 90d) de la culasse (9).

Ainsi, le système de réduction de section d'écoulement comportant un ensemble volet-axe disposé dans un conduit et un mécanisme de commande de l'ensemble est caractérisé en ce que le volet est articulé sur un axe d'articulation par des jambes parallèles et l'obturateur lui-même s'encastre en position ouverte dans un évidement du conduit de façon à reconstituer avec le volet encastré le profil du conduit pour éliminer toute perte de charge, l'axe de pivotement d'un volet étant intercalaire entre deux volets adjacents et à l'extérieur des conduits, la symétrisation du montage des jambes par rapport à l'axe de symétrie de la géométrie de l'ensemble volet-axe et l'axe d'articulation de l'ensemble permettant de diminuer le couple de réaction sur l'axe d'articulation, le mécanisme de commande de l'ensemble étant extérieur au conduit.

Selon une autre particularité, le mécanisme extérieur permet de régler la progressivité du débit de fluide en déplaçant le volet dans une position plus ou moins saillante par rapport au profil d'un conduit pouvant aller jusqu'à la fermeture éventuelle du conduit.

Selon une autre particularité, les volets ont une section en forme de U dont la partie centrale (20a) sur sa face externe (201a à 201 d) en vis-à-vis de l'évidement (1010a à 1010b) du boîtier est en forme de portion de cylindres à axe confondu avec l'axe de rotation (23) des volets, l'évidement (1010a à 10140d) ayant une forme complémentaire et la surface intérieure (202a à 202d) de la partie centrale en vis-à-vis du flux de fluide a une forme complémentaire à celle du logement.

Selon une autre particularité, les jambes du U (21a à 21d, 22a à 22d) sont reliées d'une part à chaque extrémité latérale d'un volet (20a à 20d) et d'autre part à une extrémité d'un axe (23a, 23ab, 23bc, 23cd, 23d) dont l'autre extrémité est reliée à une jambe du volet adjacent, de façon que l'ensemble des volets et des axes forme en vue de face une succession de créneaux et qui constitue une pièce mono-bloc.

Selon une autre particularité, le système est disposé entre un conduit de culasse (9) vers un cylindre d'un moteur comportant un conduit inférieur (90a à 90d) et un conduit supérieur (91a à 91d) et les tubulures (70a à 70d) formant un répartiteur (7) d'admission d'air, le dit système comportant pour chaque cylindre un logement (10a à 10d) permettant l'écoulement d'un flux de fluide entre le répartiteur d'air et le cylindre, logement dans lequel un volet (20a à 20d) se déplace en travers du sens (A) d'écoulement du fluide, le volet venant, en position escamotée, se loger dans un évidement (1010a à 1010d) prévu dans chaque logement (10a à 10d) pour libérer totalement le passage du flux, le mécanisme de commande de l'ensemble comportant l'axe de rotation (23a à 23d) de commande des déplacements de chaque volet étant disposé à l'extérieur de chaque logement (10a à 10d) pour ne pas interrompre le flux d'écoulement des fluides et étant relié au volet (20) pour permettre le déplacement de la position escamotée vers une position où le volet obture un des deux conduits (90, 91) du conduit de culasse.

Selon une autre particularité, chaque logement (10a à 10d) formé dans un boîtier (1) débouche par trois ouvertures, une première ouverture communiquant avec le répartiteur (7), une deuxième ouverture communiquant avec un conduit (9a à 9d) de culasse d'un cylindre, disposées toutes deux selon l'axe du flux d'écoulement et enfin une troisième ouverture (15a à 15d) perpendiculaire à l'axe du flux d'écoulement, la face du boîtier pourvue de chaque troisième ouverture étant pourvue entre chaque troisième ouverture, de logements (12ab à 12cd) paliers pour recevoir chaque portion d'axe reliant le volet d'un logement au volet du logement adjacent, le boîtier (1) étant pourvu d'un couvercle (3) assurant une étanchéité suffisante entre le logement (10b) associé à un cylindre et les autres logements (10a et 10c) adjacents associés aux autres cylindres adjacents.

Selon une autre particularité, le couvercle (3) comporte dans sa partie située en vis-à-vis des logements (10a, 10b, 10c, 10d), une section (30a à 30d) complémentaire de celle du boîtier (1) pour former le logement et des parois latérales (31a à 31d, 32a à 32d) descendant jusqu'au niveau du volet (20a à 20d) pour enserrer chaque jambe (21a à 21d, respectivement 22a à 22d) du volet (20a à 20d) entre cette paroi et la paroi du boîtier.

Selon une autre particularité, le boîtier comporte des canaux (13, 14) de fixation disposés en quinconce.

Selon une autre particularité, l'étanchéité totale entre le couvercle (3) et le boîtier (1) est réalisée soit par une soudure de la périphérie externe des deux pièces, soit par l'adjonction d'un joint périphérique entre les deux pièces, l'assemblage étant alors réalisé par vis.

Selon une autre particularité, le système comporte une interface pour connexion d'un système d'entraînement pneumatique ou électrique permettant de localiser le système d'entraînement à l'extérieur en vis-à-vis de l'un des conduits (90, 91) de cylindres en fonction des contraintes d'environnement.

Selon une autre particularité, un joint peut être intégré à chaque demi palier (23ab, 23bc, 23cd) pour assurer une étanchéité entre chaque conduit (10a à 10d).

Selon une autre particularité, la portion de boîtier formant les troisièmes conduits présente, dans la zone du système, une ouverture (15a à 15d) suffisamment grande pour permettre le montage et le fonctionnement du système de volets.

Selon une autre particularité, les butées (1011a à 1011d) de fin de course du volet sont réalisées dans le boîtier (1).

Selon une autre particularité, une ou plusieurs pièces du système sont réalisées en matière plastique chargée de matériau lubrifiant afin de réduire les frottements avec les autres pièces du mécanisme.

Selon une autre particularité, le matériau plastique est du polyamide et les matériaux lubrifiants sont du molybdène ou du graphite.

Selon une autre particularité, le système est accolé directement à la culasse (9) pour obturer directement une section d'un conduit par appui de chaque volet sur chacun des conduits.

Il doit être évident pour les personnes versées dans l'art que la présente inventionpermet des modes de réalisation sous de nombreuses autres formes spécifiques sans l'éloigner du domaine d'application de l'invention comme revendiqué. Par conséquent, le sprésents modes de réalisations doivent être considérés à titre d'illustration, mais peuvent être modifiés dans le domaine défini par la portée des revendications jointes, et l'invention ne doit pas être limitée aux détails donnés ci-dessus.

## Revendications

1. Système de réduction de section d'écoulement comportant un ensemble volet- axe (2) disposé dans un conduit (10a- 10d) et un mécanisme de commande de l'ensemble extérieur au conduit, **caractérisé en ce que** le volet (20a-20d) est articulé sur un axe d'articulation (23) par des jambes (21a-21d, 22a-22d) parallèles et l'obturateur lui-même s'encastre en position ouverte dans un évidement (1010a-1010d) du conduit (10a-10d) de façon à reconstituer avec le volet (20a-20d) encastré le profil du conduit (10a, 10d) pour éliminer toute perte de charge, l'axe de pivotement (23) d'un volet (20a-20d) étant intercalaire entre deux volets adjacents et à l'extérieur des conduits(10a- 10d).

2. Système de réduction de section d'écoulement selon la revendication 1, **caractérisé en ce que** le montage des jambes (21a-21d, 22a-22d) est symétrique par rapport à l'axe de symétrie de la géométrie de l'ensemble_volet- axe (2) et l'axe d'articulation (23) de l'ensemble permettant de diminuer le couple de réaction sur l'axe d'articulation (23).

3. Système de réduction de section d'écoulement selon la revendication 1 ou 2, **caractérisé en ce que** le mécanisme extérieur permet de régler la progressivité du débit de fluide en déplaçant le volet dans une position plus ou moins saillante par rapport au profil d'un conduit pouvant aller jusqu'à la fermeture éventuelle du conduit.

4. Système de réduction de section d'écoulement selon une des revendications 1 à 3, **caractérisé en ce que** les volets ont une section en forme de U dont la partie centrale (20a) sur sa face externe (201a à 201d) en vis-à-vis de l'évidement (1010a à 1010b) du boîtier est en forme de portion de cylindres à axe confondu avec l'axe de rotation (23) des volets, l'évidement (1010a à 10140d) ayant une forme complémentaire et la surface intérieure (202a à 202d) de la partie centrale en vis-à-vis du flux de fluide a une forme complémentaire à celle du logement.

5. Système de réduction de section d'écoulement selon une des revendications 1 à 4, **caractérisé en ce que** les jambes du U (21a à 21d, 22a à 22d) sont reliées d'une part à chaque extrémité latérale d'un volet (20a à 20d) et d'autre part à une extrémité d'un axe (23a, 23ab, 23bc, 23cd, 23d) dont l'autre extrémité est reliée à une jambe du volet adjacent, de façon que l'ensemble des volets et des axes forme en vue de face une succession de créneaux et qui constitue une pièce mono-bloc.

6. Système de réduction de section d'écoulement selon une des revendications 1 à 5, **caractérisé en ce qu'**il est disposé entre un conduit de culasse (9) vers un cylindre d'un moteur comportant un conduit inférieur (90a à 90d) et un conduit supérieur (91a à 91d) et les tubulures (70a à 70d) formant un répartiteur (7) d'admission d'air, le dit système comportant pour chaque cylindre un logement (10a à 10d) permettant l'écoulement d'un flux de fluide entre le répartiteur d'air et le cylindre, logement dans lequel un volet (20a à 20d) se déplace en travers du sens (A) d'écoulement du fluide, le volet venant, en position escamotée, se loger dans un évidement (1010a à 1010d) prévu dans chaque logement (10a à 10d) pour libérer totalement le passage du flux, le mécanisme de commande de l'ensemble comportant l'axe de rotation (23a à 23d) de commande des déplacements de chaque volet étant disposé à l'extérieur de chaque logement (10a à 10d) pour ne pas interrompre le flux d'écoulement des fluides et étant relié au volet (20) pour permettre le déplacement de la position escamotée vers une position où le volet obture un des deux conduits (90, 91) du conduit de culasse.

7. Système de réduction de section d'écoulement selon une des revendications 1 à 6, **caractérisé en ce que** chaque logement (10a à 10d) formé dans un boîtier (1) débouche par trois ouvertures, une première ouverture communiquant avec le répartiteur (7), une deuxième ouverture communiquant avec un conduit (9a à 9d) de culasse d'un cylindre, disposées toutes deux selon l'axe du flux d'écoulement et enfin une troisième ouverture (15a à 15d) perpendiculaire à l'axe du flux d'écoulement, la face du boîtier pourvue de chaque troisième ouverture étant pourvue entre chaque troisième ouverture, de logements (12ab à 12cd) paliers pour recevoir chaque portion d'axe reliant le volet d'un logement au volet du logement adjacent, le boîtier (1) étant pourvu d'un couvercle (3) assurant une étanchéité suffisante entre le logement (10b) associé à un cylindre et les autres logements (10a et 10c) adjacents associés aux autres cylindres adjacents.

8. Système de réduction de section d'écoulement selon une des revendications 1 à 7, **caractérisé en ce que** le couvercle (3) comporte dans sa partie située en vis-à-vis des logements (10a, 10b, 10c, 10d), une section (30a à 30d) complémentaire de celle du boîtier (1) pour former le logement et des parois latérales (31a à 31d, 32a à 32d) descendant jusqu'au niveau du volet (20a à 20d) pour enserrer chaque jambe (21a à 21d, respectivement 22a à 22d) du volet (20a à 20d) entre cette paroi et la paroi du boîtier.

9. Système de réduction de section d'écoulement selon une des revendications 1 à 8, **caractérisé en ce que** le boîtier comporte des canaux (13, 14) de fixation disposés en quinconce.

10. Système de réduction de section d'écoulement selon une des revendications 1 à 9, **caractérisé en ce que** l'étanchéité totale entre le couvercle (3) et le boîtier (1) est réalisée soit par une soudure de la périphérie externe des deux pièces, soit par l'adjonction d'un joint périphérique entre les deux pièces, l'assemblage étant alors réalisé par vis.

11. Système de réduction de section d'écoulement selon une des revendications 1 à 10, **caractérisé en ce qu'**il comporte une interface pour connexion d'un système d'entraînement pneumatique ou électrique permettant de localiser le système d'entraînement à l'extérieur en vis-à-vis de l'un des conduits (90, 91) de cylindres en fonction des contraintes d'environnement.

12. Système selon l'une des revendications 1 à 11, **caractérisé en ce qu'**un joint peut être intégré à chaque demi palier (23ab, 23bc, 23cd) pour assurer une étanchéité entre chaque conduit (10a à 10d).

13. Système selon l'une des revendications 1 à 12, **caractérisé en ce que** la portion de boîtier formant les troisièmes conduits présente, dans la zone du système, une-ouverture (15a à 15d) suffisamment grande pour permettre le montage et le fonctionnement du système de volets.

14. Système selon l'une des revendications 1 à 13, **caractérisé en ce que** les butées (1011a à 1011d) de fin de course du volet sont réalisées dans le boîtier (1).

15. Système de réduction de section d'écoulement selon l'une des revendications 1 à 14, **caractérisé en ce qu'**une ou plusieurs pièces du système sont réalisées en matière plastique chargée de matériau lubrifiant afin de réduire les frottements avec les autres pièces du mécanisme.

16. Système de réduction de section d'écoulement selon l'une des revendications 1 à 15, **caractérisé en ce que** le matériau plastique est du polyamide et les matériaux lubrifiants sont du molybdène ou du graphite.

17. Système de réduction de section d'écoulement selon une des revendications 1 à 16, **caractérisé en ce que** le système est accolé directement à la culasse (9) pour obturer directement une section d'un conduit par appui de chaque volet sur chacun des conduits.

## Patentansprüche

1. System zur Reduzierung des Durchflussquerschnitts, mit einer in einer Leitung (10a-10d) angeordneten Baugruppe (2) bestehend aus einer Klappe und einer Achse und mit einem sich außerhalb der Leitung befindenden Mechanismus zur Steuerung der Baugruppe, **dadurch gekennzeichnet, dass** die Klappe (20a-20d) durch parallele Schenkel (21a-21d, 22a-22d) um einer Schwenkachse (23) schwenkt und der Verschluss selbst sich in der geöffneten Position in eine Vertiefung (1010a-1010d) der Leitung (10a-10d) so einfügt, dass er mit der eingefügten Klappe (20a-20d) das Profil der Leitung (10a-10d) rekonstituiert, um jeglichen Druckverlust zu beseitigen, wobei die Schwenkachse (23) einer Klappe (20a-20d) zwischen zwei nebeneinanderliegenden Klappen und außerhalb der Leitungen (10a-10d) eingeschoben ist.

2. System zur Reduzierung des Durchflussquerschnitts nach Anspruch 1, **dadurch gekennzeichnet, dass** die Schenkel (21a-21d, 22a-22d) bezüglich der Symmetrieachse der Geometrie der Baugruppe Klappe/Achse (2) symmetrisch angebracht sind, wodurch eine Verringerung des Reaktionsdrehmoments an der Schwenkachse (23) ermöglicht wird.

3. System zur Reduzierung des Durchflussquerschnitts nach Anspruch 1 oder 2, **dadurch gekennzeichnet, dass** der Außenmechanismus es ermöglicht, das Fortschreiten des Fluiddurchflusses zu regulieren, indem die Klappe bezüglich des Profils einer Leitung in eine mehr oder weniger hervorstehende Stellung verlagert wird, die bis zu einem möglichen Verschluss der Leitung reichen kann.

4. System zur Reduzierung des Durchflussquerschnitts nach einem der Ansprüche 1 bis 3, **dadurch gekennzeichnet, dass** die Klappen einen U-förmigen Querschnitt aufweisen, dessen mittlerer Teil (20a) an seiner Außenfläche (201 a-201d) gegenüber der Vertiefung (1010a-1010b) des Gehäuses, die Form eines Zylinderabschnitts aufweist, dessen Zylinderachse mit der Drehachse (23) der Klappen zusammenfällt, wobei die Vertiefung (1010a-1010d) eine komplementäre Form besitzt und die Innenfläche (202a-202d) des mittleren Teils gegenüber dem Fluidstrom eine Form besitzt, die zur Form der Aufnahme komplementär ist.

5. System zur Reduzierung des Durchflussquerschnitts nach einem der Ansprüche 1 bis 4, **dadurch gekennzeichnet, dass** die Schenkel (21 a-21 d, 22a-22d) des U einerseits mit jedem Seitenende einer Klappe (20a-20d) und andererseits mit einem Ende einer Achse (23a, 23ab, 23bc, 23cd, 23d) verbunden sind, deren anderes Ende mit einem Schenkel der angrenzenden Klappe verbunden ist, so dass die Baugruppe aus den Klappen und den Achsen in der Vorderansicht eine Folge von Zinnen darstellt und ein einstückiges Teil bildet.

6. System zur Reduzierung des Durchflussquerschnitts nach einem der Ansprüche 1 bis 5, **dadurch gekennzeichnet, dass** es zwischen einer Leitung eines Zylinderkopfes (9) zu einem Motorzylinder, die eine untere Leitung (90a-90d) und eine obere Leitung (91a-91d) aufweist, und den einen Lufteinlassverteiler (7) bildenden Rohren (70a-70d) angeordnet ist, wobei das System für jeden Zylinder eine Aufnahme (10a-10d) aufweist, die den Durchfluss eines Fluidstroms zwischen dem Luftverteiler und dem Zylinder ermöglicht, wobei sich in der Aufnahme eine Klappe (20a-20d) quer zur Durchflussrichtung (A) des Fluids verlagert, wobei die Klappe in der eingezogenen Stellung in eine Vertiefung (1010a-1010d) aufgenommen wird, die in jeder Aufnahme (10a-10d) vorgesehen ist, so dass der Stromdurchgang vollständig freigegeben ist, wobei der Mechanismus zur Steuerung der Baugruppe, der die Drehachse (23a-23d) zur Steuerung der Verlagerungen jeder Klappe aufweist, außerhalb jeder Aufnahme (10a-10d) angeordnet ist, so dass der Durchflussstrom der Fluide nicht unterbrochen wird, und mit der Klappe (20) verbunden ist, um die Verlagerung von der eingezogenen Stellung in eine Stellung zu ermöglichen, in der die Klappe eine der beiden Leitungen (90, 91) der Zylinderkopfleitung verschließt.

7. System zur Reduzierung des Durchflussquerschnitts nach einem der Ansprüche 1 bis 6, **dadurch gekennzeichnet, dass** jede in einem Gehäuse (1) ausgebildete Aufnahme (10a-10d) in drei Öffnungen mündet, wobei eine erste Öffnung mit dem Verteiler (7) verbunden ist, eine zweite Öffnung mit einer Leitung (9a-9d) eines Zylinderkopfes verbunden ist und beide entlang der Achse des Durchflussstroms angeordnet sind, und wobei schließlich eine dritte Öffnung (15a-15d) senkrecht zur Achse des Durchflussstroms ist, wobei die mit jeder dritten Öffnung versehene Gehäusefläche zwischen jeder dritten Öffnung mit Lageraufnahmen (12ab-12cd) versehen ist, um jeden Achsenabschnitt aufzunehmen, der die Klappe einer Aufnahme mit der Klappe einer angrenzenden Aufnahme verbindet, wobei das Gehäuse (1) mit einem Deckel (3) versehen ist, der eine ausreichende Dichtigkeit zwischen der Aufnahme (10b), die einem Zylinder zugeordnet ist, und den anderen angrenzenden Aufnahmen (10a und 10c) gewährleistet, welche den anderen angrenzenden Zylindern zugeordnet sind.

8. System zur Reduzierung des Durchflussquerschnitts nach einem der Ansprüche 1 bis 7, **dadurch gekennzeichnet, dass** der Deckel (3) in seinem Teil, der gegenüber den Aufnahmen (10a, 10b, 10c, 10d) liegt, einen Abschnitt (30a-30d) aufweist, der zu dem des Gehäuses (1) komplementär ist, um die Aufnahme und Seitenwände (31a-31d, 32a-32d) zu bilden, welche bis zu den Klappen (20a-20d) hinunterreichen, um jeden Schenkel (21a-21d bzw. 22a-22d) der Klappe (20a-20d) zwischen dieser Wand und der Gehäusewand zu umklammern.

9. System zur Reduzierung des Durchflussquerschnitts nach einem der Ansprüche 1 bis 8, **dadurch gekennzeichnet, dass** das Gehäuse Befestigungskanäle (13, 14) aufweist, die im Zickzack angeordnet sind.

10. System zur Reduzierung des Durchflussquerschnitts nach einem der Ansprüche 1 bis 9, **dadurch gekennzeichnet, dass** die vollständige Dichtigkeit zwischen dem Deckel (3) und dem Gehäuse (1) entweder durch eine Schweißverbindung des Außenumfangs der beiden Teile oder durch Anbringen einer Umfangsdichtung zwischen den beiden Teile realisiert ist, wobei das Zusammensetzen durch Schrauben realisiert ist.

11. System zur Reduzierung des Durchflussquerschnitts nach einem der Ansprüche 1 bis 10, **dadurch gekennzeichnet, dass** es eine Schnittstelle zur Verbindung mit einem pneumatischen oder elektrischen Antriebssystem aufweist, so dass es möglich ist, das Antriebssystem in Abhängigkeit von den Außenverhältnissen außen gegenüber einer der Zylinderleitungen (90, 91) zu lokalisieren.

12. System nach einem der Ansprüche 1 bis 11, **dadurch gekennzeichnet, dass** eine Dichtung in jedes halbe Lager (23ab, 23bc, 23cd) eingesetzt werden kann, um eine Dichtigkeit zwischen jeder Leitung (10a-10d) zu gewährleisten.

13. System nach einem der Ansprüche 1 bis 12, **dadurch gekennzeichnet, dass** der die dritten Leitungen bildende Gehäuseabschnitt im Systembereich eine Öffnung (15a-15d) aufweist, die ausreichend groß ist, um die Montage und den Betrieb des Klappensystems zu ermöglichen.

14. System nach einem der Ansprüche 1 bis 13, **dadurch gekennzeichnet, dass** die Anschläge (1011a-1011d) der Endstellung der Klappe im Gehäuse (1) realisiert sind.

15. System zur Reduzierung des Durchflussquerschnitts nach einem der Ansprüche 1 bis 14, **dadurch gekennzeichnet, dass** ein oder mehrere Teile des Systems aus Kunststoffmaterial realisiert sind, das mit Schmiermittelanteil ist, so dass die Reibungen mit den anderen Teilen des Mechanismus vermindert werden.

16. System zur Reduzierung des Durchflussquerschnitts nach einem der Ansprüche 1 bis 15, **dadurch gekennzeichnet, dass** das Kunststoffmaterial Polyamid ist und die Schmiermittel Molybdän oder Graphit sind.

17. System zur Reduzierung des Durchflussquerschnitts nach einem der Ansprüche 1 bis 16, **dadurch gekennzeichnet, dass** das System direkt am Zylinderkopf (9) angefügt ist, um einen Querschnitt einer Leitung direkt durch Andrücken jeder Klappe auf jede der Leitungen zu verschließen.

## Claims

1. Flow section-reducing system comprising a shutter/pin unit (2) arranged in a duct (10a to 10d) and a mechanism for controlling the unit outside the duct, **characterised in that** the shutter (20a to 20d) is hinged on a hinge pin (23) by means of parallel arms (21a to 21d, 22a to 22d) and, in the open position, the obturator itself fits into a recess (1010a to 1010d) in the duct (10a to 10d) so as to reform with the fitted shutter (20a to 20d) the profile of the duct (10a to 10d) to prevent any loss in pressure, the pivot pin (23) of a shutter (20a to 20d) being inserted between two adjoining shutters and outside the ducts (10a to 10d).

2. Flow section-reducing system according to claim 1, **characterised in that** the mounting of the arms (21a to 21d, 22a to 22d) is symmetrical about the axis of symmetry of the geometry of the shutter/pin unit (2) and the hinge pin (23) of the unit, permitting the reaction torque on the hinge pin (23) to be reduced.

3. Flow section-reducing system according to either claim 1 or 2, **characterised in that** the external mechanism allows the progressiveness, of the fluid flow rate to be adjusted by moving the shutter into a more or less prominent position relative to the duct profile, up to the optional closing of the duct.

4. Flow section-reducing system according to any one of claims 1 to 3, **characterised in that** the shutters have a U-shaped cross-section, of which the central portion (20a) on its outer face (201 a to 201 d) facing the recess (1010a to 1010b) of the housing is in the form of a cylinder portion having an axis coincident with the rotational pin (23) of the shutters, the recess (1010a to 1010d) having a complementary shape and the inner surface (202a to 202d) of the central portion facing the fluid flow having a shape complementary with that of the chamber.

5. Flow section-reducing system according to any one of claims 1 to 4, **characterised in that** the arms of the U (21a to 21d, 22a to 22d) are connected, on the one hand, to each lateral end of a shutter (20a to 20d) and, on the other hand, to an end of a pin (23a, 23ab, 23bc, 23cd, 23d), the other end of which is connected to an arm of the adjoining shutter, so that all of the shutters and pins form, in elevation, a succession of crenellations forming a single piece.

6. Flow section-reducing system according to any one of claims 1 to 5, **characterised in that** it is arranged between a cylinder head duct (9) to an engine cylinder comprising a lower duct (90a to 90d) and an upper duct (91a to 91d), and the pipes (70a to 70d) forming an air intake manifold (7), said system comprising for each cylinder a chamber (10a to 10d) for the flow of fluid between the air manifold and the cylinder, in which chamber a shutter (20a to 20d) moves across the direction of flow (A) of the fluid, the shutter being accommodated, in the retracted position, in a recess (1010a to 1010d) provided in each chamber (10a to 10d) in order to completely clear the passage for the flow, the mechanism for controlling the unit comprising the rotational pin (23a to 23d) for controlling the movements of each shutter being arranged outside each chamber (10a to 10d), so as not to interrupt the flow of the fluids, and being connected to the shutter (20) so as to allow the displacement of the retracted position toward a position where the shutter closes one of the two ducts (90, 91) of the cylinder head duct.

7. Flow section-reducing system according to any one of claims 1 to 6, **characterised in that** each chamber (10a to 10d) formed in a housing (1) opens through three openings, a first opening communicating with the manifold (7), a second opening communicating with a cylinder head duct (9a to 9d), both arranged in the axis of flow, and, finally, a third opening (15a to 15d) perpendicular to the axis of flow, the face of the housing provided with each third opening being provided, between each third opening, with stage chambers (12ab to 12cd) for receiving each pin portion connecting the shutter of a chamber to the shutter of the adjoining chamber, the housing (1) being provided with a lid (3) ensuring an adequate seal between the chamber (10b) associated with a cylinder and the other adjoining chambers (10a and 10c) associated with the other adjoining cylinders.

8. Flow section-reducing system according to any one of claims 1 to 7, **characterised in that** the lid (3) comprises, in its portion facing the chambers (10a, 10b, 10c, 10d), a section (30a to 30d) complementary with that of the housing (1) to form the chamber, and lateral walls (31a to 31d, 32a to 32d) descending to the region of the shutter (20a to 20d) to grip each arm (21a to 21d and 22a to 22d respectively) of the shutter (20a to 20d) between this wall and the wall of the housing.

9. Flow section-reducing system according to any one of claims 1 to 8, **characterised in that** the housing comprises fixing channels (13, 14) arranged in a staggered configuration.

10. Flow section-reducing system according to any one of claims 1 to 9, **characterised in that** the complete seal between the lid (3) and the housing (1) is produced either by welding the outer periphery of the two parts or by inserting a peripheral joint between the two parts, the assembly then being produced by screws.

11. Flow section-reducing system according to any one of claims 1 to 10, **characterised in that** it comprises an interface for connecting a pneumatic or electrical drive system, allowing the drive system to be located on the outside, facing one of the cylinder ducts (90, 91) according to the environmental constraints.

12. System according to any one of claims 1 to 11, **characterised in that** a joint may be incorporated into each half-stage (23ab, 23bc, 23cd) to provide a seal between each duct (10a to 10d).

13. System according to any one of claims 1 to 12, **characterised in that** the housing portion forming the third ducts has, in the zone of the system, a sufficiently large opening (15a to 15d) to allow the mounting and operation of the shutter system.

14. System according to any one of claims 1 to 13, **characterised in that** the limit stops (1011a to 1011d) for the shutter are fabricated in the housing (1).

15. Flow section-reducing system according to any one of claims 1 to 14, **characterised in that** one or more parts of the system are made of plastics material self-weighted with lubricating material in order to reduce friction with the other parts of the mechanism.

16. Flow section-reducing system according to any one of claims 1 to 15, **characterised in that** the plastics material is polyamide and the lubricating materials are molybdenum or graphite.

17. Flow section-reducing system according to any one of claims 1 to 16, **characterised in that** the system is placed directly next to the cylinder head (9) in order directly to close a section of a duct by each shutter pressing on each of the ducts.
